(19) Europäisches Patentamt
European Patent Office
Office européen des brevets

(11) Veröffentlichungsnummer: **0 620 788 B1**

(12) **EUROPÄISCHE PATENTSCHRIFT**

(45) Veröffentlichungstag der Patentschrift: **02.11.95**

(51) Int. Cl.⁶: **B60T 8/00**

(21) Anmeldenummer: **93901598.8**

(22) Anmeldetag: **19.12.92**

(86) Internationale Anmeldenummer:
**PCT/DE92/01068**

(87) Internationale Veröffentlichungsnummer:
**WO 93/13969 (22.07.93 93/18)**

(54) **ANTIBLOCKIERREGELVERFAHREN.**

(30) Priorität: **18.01.92 DE 4201282**

(43) Veröffentlichungstag der Anmeldung:
**26.10.94 Patentblatt 94/43**

(45) Bekanntmachung des Hinweises auf die
Patenterteilung:
**02.11.95 Patentblatt 95/44**

(84) Benannte Vertragsstaaten:
**DE FR GB**

(56) Entgegenhaltungen:
**EP-A- 0 392 164
WO-A-89/11409
WO-A-91/04891
DE-A- 3 919 347
DE-A- 4 109 925**

(73) Patentinhaber: **ROBERT BOSCH GMBH
Postfach 30 02 20
D-70442 Stuttgart (DE)**

(72) Erfinder: **DODEN, Berend-Wilhelm
Imbröderstr. 12
D-7140 Ludwigsburg (DE)**
Erfinder: **MÜLLER, Elmar
Bergweg 32
D-7145 Markgröningen (DE)**

**Beschreibung**

Stand der Technik

Für eine Vielzahl von Fahrmanövern, insbesondere im ABS-Regelbetrieb oder im Teilbremsgebiet, ist es nützlich, die momentane Fahrsituation zu erfassen, um gegebenenfalls über ein Stell- oder Regelsystem korrigierend eingreifen zu können. Ein solches Verfahren ist aus der DE-A1 39 19 347 bekannt.

Vorteile der Erfindung

Bei der Erfindung wird mit einer einfacheren Sensorik die Fahrsituation verbessert. Aufgrund der physikalischen Zusammenhänge zwischen Umfangs- und Seitenkräften, die durch den Modellansatz des "Kammschen Kreises" theoretisch beschrieben werden, besteht bei der Konzipierung von ABS-Regelalgorithmen sowie im Applikationsstadium (Festlegung des Verhältnisses Umfangs- zu Seitenkräften) stets der Zielkonflikt zwischen optimaler Adaption an gegebene Reibwertverhältnisse und ausreichender Lenkfähigkeit. Gerade bei dynamischen Lenkmanövern, insbesondere auf niedrigen Reibwerten, ist eine ausreichende Lenkfähigkeit nicht gewährleistet.

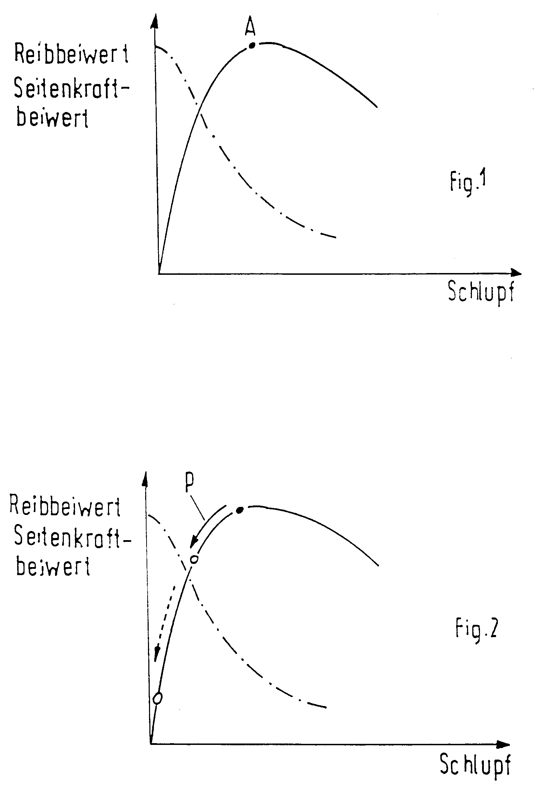

Dieser Mangel ist begründet in der kompromißbehafteten Festlegung des Arbeitspunktes A in der $\mu$-Schluß-Kurve (Fig. 1), der bei Geradeausfahrt nahe beim Maximum der Kurve liegen soll.

Eine Unterscheidung zwischen Geradeaus- und Kurvenfahrt bzw. die Erkennung von dynamischen Fahrmanövern (z.B. Spurwechsel) ist hinreichend genau über den Ansatz des linearen Einspurmodells in Verbindung mit analogen Lenkwinkel- und Querbeschleunigungssensoren der folgenden Gleichung möglich.

$$\delta_1 = \left[ \frac{1}{v^2} + m \left( \frac{l_h \cdot c_{sv} - l_v \cdot c_{sh}}{l \cdot c_{sv} \cdot c_{sh}} \right) \right] \cdot a_q$$
$$k$$

Hierin bedeuten:

$\delta_1$ : berechneter Leknkwinkel
l : Radstand
m : Fahrzeugmasse
v : Fahzeuggeschwindigkeit
cs v/h : Schräglaufsteife
l v/h : Abstand Rad-Schwerpunkt
k : Fahrzeugkonstante

Eine im ABS-Regelalgorithmus verwertbare Größe stellt die Differenz zwischen dem analogen Sensorsignal $\delta_2$ eines Lenkwinkelgebers und dem aus der obigen Gleichung berechneten Lenkwinkel dar. Je nach Größe dieser Differenz läßt sich der Arbeitspunkt in der $\mu$-Schlupf-Kurve kontinuierlich in Richtung höheren Seitenkraftbeiwerts, d.h. verminderte Umfangskraft, entsprechend den Pfeil P der Fig. 2 verschieben. Können aufgrund eines Seitenkraftüberschuß wieder höhere Umfangskräfte übertragen werden, nimmt die Winkeldifferenz ($\delta_2 - \delta_1$) ab und es vollzieht sich der Vorgang in umgekehrter Richtung.

Eine besonders vorteilhafte Anwendung der Erfindung ergibt sich, wenn für Vorder- und Hinterachse eine getrennte gegebenenfalls unterschiedlich Parameterisierung vorgenommen wird, d.h. getrenntes Arbeitspunktverschiebung durchgeführt wird. Hierdurch kann das Eigenlenkverhalten (Über- und Untersteuerung) eines Kraftfahrzeugs im ABS-Regelbetrieb gezielt beeinflußt werden.

Wird zusätzlich zu der Lenkwinkeldifferenz die Anstiegsgeschwindigkeit des analogen Lenkwinkelsignals mit in die Bewertung einbezogen (z.B. additiv oder multiplikativ), so läßt sich das Ansprechverhalten noch deutlich verbessern.

So kann z.B. in einem Winkel bereich kleiner 10° durch ($\delta_2 - \delta_1$) keine Reaktion hervorgerufen werden, jedoch durch d ($\delta_2 - \delta_1$) dt bzw. ($\delta_2 - \delta_1$) < 10° sehr wohl eine Änderung bewirkt werden (z.B. bei d ($\delta_2 - \delta_1$) dt/200°/s.

Ferner wird durch diese Maßnahme eine gewisse Überempfindlichkeit der Ansprechschwelle vermieden.

Die Möglichkeit, das Verhältnis von Umfangs- zu Seitenkräften in Abhängigkeit von einem Differenzlenkwinkel getrennt für Vorder- und Hinterachse einstellen zu können, gibt dem Applikateur ein Hilfsmittel, um das Eingenverhalten eines Fahrzeuges geeignet beeinflussen zu können.

Weiterhin kann über die Information des des Differenzlenkwinkels und dessen Adaptivität dem Fahrerwunsch schneller entsprochen werden, ohne im weiteren Verlauf der Bremsung unterbremst zu sein.

Figurenbeschreibung

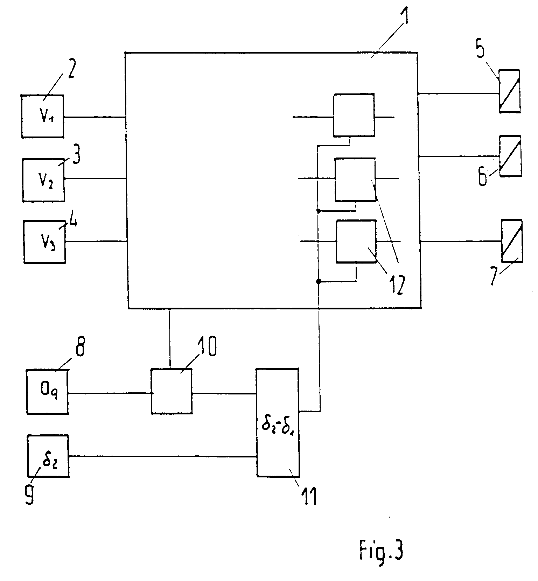

In Fig. 3 ist ein Blockschaltbild eines Bremsdruckreglers dargestellt. Einem Steuergerät 1 werden die Geschwindigkeitssignale $v_1$ und $v_2$ der Vorderräder (Sensoren 2 und 3) und das Geschwindigkeitssignal der Hinterräder (Sensor 4) zugeführt. Das Steuergerät 1 erzeugt bei Blockierneigung der Räder aus den Radgeschwindigkeitssignalen $v_1$ bis $v_3$ nach bekannten Kriterien Bremsdrucksteuersignale, die Bremsdrucksteuereinrichtungen 5 bis 7 zur Variation des Bremsdrucks zugeführt werden.

Erfindungsgemäß ist noch ein Querbeschleunigungsgeber 8 und ein Lenkwinkelgeber 9 vorgesehen. In einem Block 10 wird aus den dort gespeicherten Konstanten, der zugeführten Querbeschleunigung $a_q$, die auch geschützt sein kann, und der von dem Steuergerät 1 gelieferten, aus den Radgeschwindigkeiten ermittelten Fahrzeuggeschwindigkeit der Lenkwinkel $\delta_1$ errechnet.

In einem Differenzbildner 11 wird dann die Lenkwinkeldifferenz ($\delta_2 - \delta_1$) gebildet. Diese Differenz wird nun dazu benutzt den Arbeitspunkt in Pfeilrichtung gemäß Fig. 2 zu verschieben, wobei der Wert der Differenz ein Maß für die Verschiebung ist. Im vorliegenden Beispiel wird das Differenzsignal dazu benutzt, die Schwellen, deren Überschreiten einen Druckabbau auslöst (Blöcke 12) zu erniedrigen, so daß der Druckabbau bei Vorliegen eines Differenzwinkelsignals früher einsetzt.

**Patentansprüche**

1. Antiblockierregelverfahren, bei dem bei Blockierneigung der Bremsdruck im Sinne des Verhinderns eines zu hohen Radschlupfs variiert wird, bei dem bei Kurvenfahrt und Bremsung der Bremsdruck variiert wird und bei dem der tatsächliche Lenkwinkel $\delta_2$ gemessen und ausgewertet wird, dadurch gekennzeichnet, daß aus den Größen Fahrzeuggeschwindigkeit, Querbeschleunigung und fahrzeugspezifischen Fahrzeugkonstanten ein Lenkwinkelwert $\delta_1$ ermittelt wird und daß die Größe der Differenz ($\delta_2 - \delta_1$) des tatsächlichen Lenkwinkels $\delta_2$ und des Lenkwinkelwerts $\delta_1$ zur Verschiebung des Arbeitspunktes auf dem ansteigenden Ast der $\mu$-Schlupfkurve nach kleineren Schlupfwerten hin verwendet wird.

2. Antiblockierregelverfahren nach Anspruch 1, dadurch gekennzeichnet, daß die Anstiegsgeschwindigkeit des Lenkwinkelsignals zusätzlich auf die Verschiebung einwirkt.

**Claims**

1. Antilock brake control method in which, when there is a tendency for the wheels to lock, the brake pressure is varied for the purpose of preventing an excessive wheel slip, in which the brake pressure is varied during braking and travel round a curve and in which the actual steering angle $\delta_2$ is measured and evaluated, characterized in that a steering angle value $\delta_1$ is determined from the parameters of vehicle speed, transverse acceleration and constants specific to the vehicle and in that the magnitude of the difference ($\delta_2 - \delta_1$) between the actual steering angle $\delta_2$ and the steering angle value $\delta_1$ is used for displacing the working point towards smaller slip values on the rising branch of the $\mu$-slip curve.

2. Antilock brake control method according to Claim 1, characterized in that the rate of increase of the steering angle signal additionally acts on the displacement.

**Revendications**

1. Procédé de régulation antiblocage, dans le cas où la tendance au blocage fait varier la pression de freinage de façon à empêcher un glissement trop élevé des roues, dans le cas où le véhicule prend un virage et freine, la pression de freinage varie et dans le cas où l'angle de braquage effectif ($\delta_2$) est mesuré et exploité, procédé caractérisé en ce qu'à partir des grandeurs de la vitesse du véhicule, de l'accélération transversale, et des constantes du véhicule spécifiques de celui-ci, on détecte une valeur d'angle de braquage ($\delta_1$) et en ce que la grandeur de la différence ($\delta_2$, $\delta_1$) entre l'angle effectif de braquage ($\delta_2$) et la valeur de l'ange de braquage calculé ($\delta_1$) est utilisée pour déplacer le point de fonctionnement à partir de la branche montante de la courbe de microglissement vers des valeurs de glissement plus petites.

2. Procédé de régulation antiblocage selon la revendication 1, caractérisé en ce que la vitesse de montée du signal d'angle de braquage agit en plus sur le déplacement.

Reibbeiwert
Seitenkraftbeiwert

A

Schlupf

Fig.1

Reibbeiwert
Seitenkraftbeiwert

P

Schlupf

Fig.2

Fig.3